# EUROPEAN PATENT APPLICATION

(11) **EP 4 407 051 A1**
(43) Date of publication of application: **31.07.2024**
(21) Application number: 22898421.7
(22) Date of filing: 10.11.2022
(51) Int. Cl.: C21D 8/12, C22C 38/00, C22C 38/06, C22C 38/60, H01F 1/147

(54) **METHOD FOR PRODUCING HOT-ROLLED STEEL SHEET FOR NON-ORIENTED ELECTROMAGNETIC STEEL SHEET AND METHOD FOR PRODUCING NON-ORIENTED ELECTROMAGNETIC STEEL SHEET**

(30) Priority: 25.11.2021 JP 2021191375
(71) Applicant: JFE Steel Corporation, Tokyo 100-0011 (JP)
(72) Inventor: SUEHIRO Ryuichi, Tokyo 100-0011 (JP); OKUBO Tomoyuki, Tokyo 100-0011 (JP); UENO Masayasu, Tokyo 100-0011 (JP); YAMAGUCHI Shinya, Tokyo 100-0011 (JP); MARUYAMA Shigehiro, Tokyo 100-0011 (JP)
(74) Representative: Hoffmann Eitle
(86) International application number: PCT/JP2022/041981
(87) International publication number: WO 2023/095637

(57) **Abstract**

To suppress ridging in a process using thin slabs, ridging being a problem when handling steel containing a large amount of Si, Al, Mn alloying elements. A method of producing a hot-rolled steel sheet for a non-oriented electrical steel sheet includes: a continuous casting process of producing a steel slab by continuous casting, the steel slab having a defined chemical composition and a thickness of 50 mm or more and 200 mm or less; a transfer process of transferring the steel slab to a furnace while maintaining a surface temperature of the steel slab at 800 °C or more; a hold process of holding the steel slab in the furnace under a set of conditions including a hold temperature of 1100 °C or more to 1300 °C or less and a hold time of 60 s or more; and a hot rolling process of subjecting the steel slab to rough rolling, reheating treatment, and finish rolling in sequence to obtain a hot-rolled steel sheet, wherein the hot rolling process is performed under a set of conditions satisfying (1) and (2) below:
(1) total rolling reduction of the rough rolling: 80 % or more, and
(2) total rolling reduction of the finish rolling: 80 % or more.

## Description

### TECHNICAL FIELD

The present disclosure relates to a method of producing a hot-rolled steel sheet for a non-oriented electrical steel sheet and a method of producing a non-oriented electrical steel sheet.

### BACKGROUND

Non-oriented electrical steel sheets are a material used in iron cores of motors and generators. In recent years, from the perspective of CO₂ reduction, there has been a strong demand for higher efficiency in electric equipment, and further reduction of iron loss is sought for non-oriented electrical steel sheets that are iron core material.

To reduce iron loss in non-oriented electrical steel sheets, increasing specific resistance by adding alloying elements such as Si, Al, and Mn, and reducing sheet thickness, are effective. However, higher alloying and thinner thicknesses increase the load in cold rolling, which leads to a greater tendency to fracture during cold rolling. Thinner hot-rolled steel sheets for cold rolling can reduce the load in cold rolling, but this increases the load in hot rolling and makes shape control more difficult.

Therefore, a method of producing non-oriented electrical steel sheets using thinner steel slabs (thin slabs) than conventionally used has been proposed. In this method, a continuous casting machine called a thin slab caster is used to produce thin slabs, which are then subjected to rolling. Reducing slab thickness reduces the load in both hot rolling and cold rolling. Further, a method using thin slabs typically eliminates slab reheating by directly connecting the continuous casting machine (thin slab caster) to the hot rolling mill, which significantly reduces energy costs.

Methods of producing non-oriented electrical steel sheets using thin slabs include, for example, the methods described in Patent Literature (PTL) 1 and 2. PTL 1 describes a technology for hot rolling thin slabs having thicknesses from 20 mm to 100 mm to produce hot-rolled steel strips having thicknesses from 1.0 mm to 4 mm. Further, PTL 2 describes a technology for hot rolling thin slabs having thicknesses from 30 mm to 140 mm to produce hot-rolled steel strips having thicknesses from 0.7 mm to 4.5 mm.

### CITATION LIST

### Patent Literature

PTL 1: JP 2010-047785 A
PTL 2: JP 2002-206114 A

### SUMMARY

### (Technical Problem)

However, according to conventional technologies such as those described in PTL 1 and 2, it was found that increasing the amount of alloying elements Si, Al, Mn makes recrystallization in the hot-rolled sheet annealing more difficult, and the surface of the final non-oriented electrical steel sheet is more prone to ridging (wavy patterning).

It would be helpful to solve the above problem, specifically to suppress ridging in a process using thin slabs, ridging being a problem when handling steel containing a large amount of Si, Al, Mn alloying elements.

### (Solution to Problem)

As a result of extensive studies, the inventors found that ridging can be effectively suppressed by holding at a high temperature before the hot rolling process, dividing the hot rolling into rough rolling and finish rolling with reheating treatment between the two, and increasing the rolling reduction of the rough rolling and the finish rolling.

The present disclosure is based on the discoveries described above, and primary features of the present disclosure are as described below.
1. A method of producing a hot-rolled steel sheet for a non-oriented electrical steel sheet, comprising:
   a continuous casting process of producing a steel slab by continuous casting, the steel slab comprising a chemical composition containing, in mass%,
   Si: 2.0 % or more to 5.0 % or less,
   Al: 3.0 % or less, and
   Mn: 3.0 % or less,
   wherein a total content of Al and Mn is 0.40 % or more,
   the steel slab having a thickness of 50 mm or more and 200 mm or less;
   a transfer process of transferring the steel slab to a furnace while maintaining a surface temperature of the steel slab at 800 °C or more;
   a hold process of holding the steel slab in the furnace under a set of conditions including a hold temperature of 1100 °C or more to 1300 °C or less and a hold time of 60 s or more; and
   a hot rolling process of subjecting the steel slab to rough rolling, reheating treatment, and finish rolling in sequence to obtain a hot-rolled steel sheet, wherein
   the hot rolling process is performed under a set of conditions satisfying (1) and (2) below:
      (1) total rolling reduction of the rough rolling: 80 % or more, and
      (2) total rolling reduction of the finish rolling: 80 % or more.
2. The method of producing a hot-rolled steel sheet for a non-oriented electrical steel sheet according to 1 above, wherein delivery sheet thickness of the finish rolling is 0.4 mm or more and 2.0 mm or less.
3. The method of producing a hot-rolled steel sheet for a non-oriented electrical steel sheet according to 1 or 2 above, wherein the hot rolling process is performed under a set of conditions satisfying at least one of (1') and (2') below:
   (1') total rolling reduction of the rough rolling: 88 % or more, and
   (2') total rolling reduction of the finish rolling: 88 % or more.
4. The method of producing a hot-rolled steel sheet for a non-oriented electrical steel sheet according to any one of 1 to 3 above, wherein the total rolling reduction of the rough rolling is greater than the total rolling reduction of the finish rolling.
5. The method of producing a hot-rolled steel sheet for a non-oriented electrical steel sheet according to any one of 1 to 4 above, the chemical composition of the steel slab further containing, in mass%, at least one element selected from the group consisting of:
   C: 0.005 % or less,
   Cr: 3.0 % or less,
   Ni: 2.0 % or less,
   Cu: 2.0 % or less,
   P: 0.2 % or less,
   S: 0.0050 % or less,
   N: 0.0050 % or less,
   O: 0.0050 % or less,
   Ti: 0.0040 % or less,
   Sn: 0.20 % or less,
   Sb: 0.20 % or less,
   Mo: 0.10 % or less,
   Ca: 0.01 % or less,
   REM: 0.05 % or less,
   Mg: 0.01 % or less, and
   Zn: 0.01 % or less.
6. A method of producing of a non-oriented electrical steel sheet, comprising:
   a hot-rolled steel sheet production process producing a hot-rolled steel sheet according to the method of producing a hot-rolled steel sheet for a non-oriented electrical steel sheet according to any one of 1 to 5 above;
   a hot-rolled sheet annealing process of annealing the hot-rolled steel sheet;
   a cold rolling process of cold rolling the hot-rolled steel sheet to obtain a cold-rolled steel sheet; and
   a final annealing process of final annealing the cold-rolled steel sheet.

### (Advantageous Effect)

According to the present disclosure, producing a non-oriented electrical steel sheet having high alloy content and thin thickness is possible at low cost and without causing ridging.

### BRIEF DESCRIPTION OF THE DRAWINGS

In the accompanying drawings:
FIG. 1 is a graph illustrating correlation between total content of Al and Mn (in mass%) in steel slabs and arithmetic mean waviness Wa (µm) in the width direction of non-oriented electrical steel sheets;
FIG. 2 is a graph illustrating correlation between hold temperature (°C) and hold time (s) in the hold process and arithmetic mean waviness Wa (µm) in the width direction of non-oriented electrical steel sheets; and
FIG. 3 is a graph illustrating correlation between total rolling reduction (%) of rough rolling and total rolling reduction (%) of finish rolling and arithmetic mean waviness Wa (µm).

### DETAILED DESCRIPTION

First, experiments that led to the development of the present disclosure are described. Hereinafter, "%" as a unit of content indicates "mass%" unless otherwise specified.

### (Experiment 1)

Steel slabs each having a thickness of 160 mm and a chemical composition consisting of C: 0.002 %, Si: 3.0 %, Al: 0.05 % to 2.0 %, Mn 0.05 % to 1.0 %, Cr: 0.01 %, Ni: 0.01 %, Cu 0.01 %, P: 0.01 %, N: 0.003 %, S: 0.002 %, O: 0.001 %, and Ti: 0.001 %, with the balance being Fe and inevitable impurity, were melted in a vacuum melting furnace. The obtained steel slabs were then hot rolled by one of the following two methods.

### (1) Reheating rolling:

After the steel slab was removed from the vacuum melting furnace, the entire steel slab was allowed to naturally cool in air to room temperature. The steel slab was then charged into an electric furnace, and after reheating treatment at 1100 °C for 30 min, the steel slab was removed from the electric furnace and inserted into a hot rolling mill.

### (2) Hot charging:

After the steel slab was removed from the vacuum melting furnace, the steel slab was inserted into the hot rolling mill so that the surface temperature did not fall to 900 °C or less.

In either of the above methods, in hot rolling, the steel slab was rough rolled to a thickness of 15 mm, then reheated to 1100 °C by an induction heater, and then finish rolled to a thickness of 1.5 mm to obtain a hot-rolled steel sheet.

The hot-rolled steel sheet was subjected to hot-rolled sheet annealing at 1000 °C for 40 s and then cold rolled to obtain a cold-rolled steel sheet having a thickness of 0.3 mm. The cold-rolled steel sheet was then subjected to final annealing at 980 °C for 20 s to obtain a non-oriented electrical steel sheet.

In order to evaluate ridging on the surface of the non-oriented electrical steel sheet, arithmetic mean waviness (Wa) of the surface of the non-oriented electrical steel sheet was measured. In measuring the arithmetic mean waviness Wa, a stylus-type surface roughness meter was used, and the arithmetic mean waviness Wa was calculated from a waviness curve obtained by measuring the steel sheet surface with a measuring length of 16 mm in the sheet transverse direction.

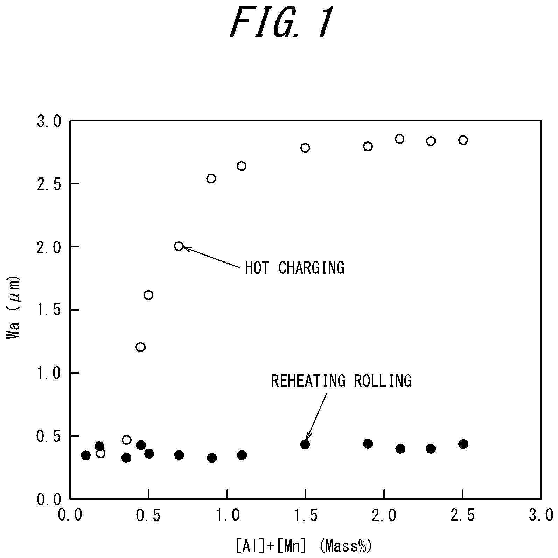

A relationship between total content of Al and Mn (mass%) and the measured Wa (µm) of the steel slabs used is illustrated in FIG. 1. In the following description, the Al content of the steel slab is denoted as [Al], the Mn content of the steel slab as [Mn], and the total Al and Mn content of the steel slab as [Al] + [Mn],

As can be seen from the results illustrated in FIG. 1, no ridging occurred in reheating rolling regardless of the value of [Al] + [Mn], but in hot charging, ridging occurred when [Al] + [Mn] exceeded 0.4 %. Observation of the microstructure of hot-rolled steel sheets obtained by a process using hot charging revealed that a non-recrystallized microstructure remained in hot-rolled steel sheets that had a value of [Al] + [Mn] higher than 0.4 %.

Based on the above experimental results, the inventors estimated that the occurrence of ridging observed when hot charging was used was due to residual non-recrystallized microstructure in the hot-rolled sheet annealing. Thus, further study was conducted on how to promote recrystallization in the hot-rolled sheet annealing.

### (Experiment 2)

The inventors estimated that hot charging causes fine precipitates such as MnS and AlN to precipitate, and that these fine precipitates hinder recrystallization in the hot-rolled sheet annealing. Thus, the inventors decided to perform hold treatment prior to the hot rolling process to precipitate and grow precipitates and reduce fine precipitates, and studied the necessary conditions to achieve this.

Steel slabs each having a thickness of 120 mm and a chemical composition consisting of C: 0.002 %, Si: 3.0 %, Al: 0.5 %, Mn 0.2 %, Cr: 0.01 %, Ni: 0.01 %, Cu 0.01 %, P: 0.01 %, N: 0.003 %, S: 0.002 %, O: 0.001 %, and Ti: 0.001 %, with the balance being Fe and inevitable impurity, were melted in a vacuum melting furnace. Each of the steel slabs was transported and charged into an electric furnace while maintaining a surface temperature of the steel slab at 800 °C or more, and hold treatment was conducted at a hold temperature of 1000 °C to 1350 °C for a hold time of 30 s to 600 s (hold process). Subsequently, each of the steel slabs was removed from the electric furnace and inserted into a hot rolling mill for hot rolling. In the hot rolling, the steel slab was rough rolled to a thickness of 10 mm, then reheated to 1100 °C by an induction heater, and then finish rolled to a thickness of 1.2 mm to obtain a hot-rolled steel sheet.

The hot-rolled steel sheet was subjected to hot-rolled sheet annealing at 1000 °C for 40 s and then cold rolled to obtain a cold-rolled steel sheet having a thickness of 0.3 mm. The cold-rolled steel sheet was then subjected to final annealing at 980 °C for 20 s to obtain a non-oriented electrical steel sheet.

The arithmetic mean waviness Wa on the surface of the non-oriented electrical steel sheet was measured using the same procedure as in Experiment 1 above.

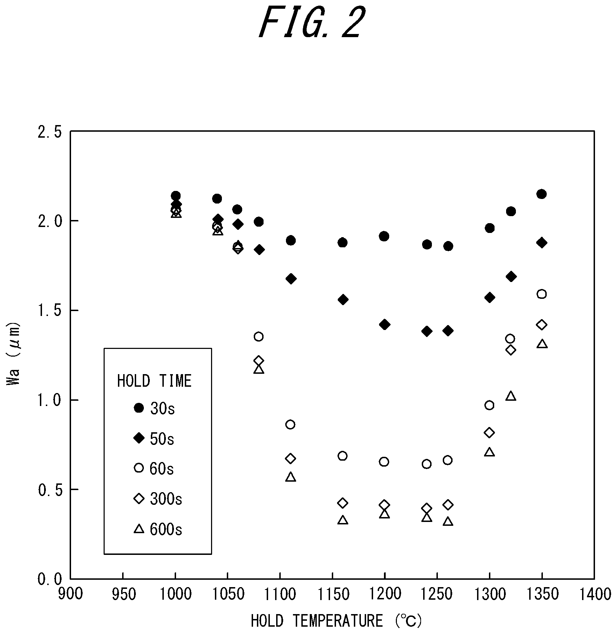

The relationship between hold temperature and hold time in the hold process and the arithmetic mean waviness Wa is illustrated in FIG. 2. As can be seen from the results illustrated in FIG. 2, ridging occurred at all hold temperatures when the hold time was less than 60 s. On the other hand, when the hold time was 60 s or more, ridging was suppressed in the range of hold temperatures from 1100 °C or more to 1300 °C or less.

### (Experiment 3)

Next, the inventors conducted the following experiments to study the distribution of rolling reduction between rough hot rolling and finish hot rolling in hot charging.

Steel slabs each having a thickness of 160 mm and a chemical composition consisting of C: 0.002 %, Si: 3.0 %, Al: 0.5 %, Mn 0.2 %, Cr: 0.01 %, Ni: 0.01 %, Cu 0.01 %, P: 0.01 %, N: 0.003 %, S: 0.002 %, O: 0.001 %, and Ti: 0.001 %, with the balance being Fe and inevitable impurity, were melted in a vacuum melting furnace. Each of the steel slabs was transported and charged into an electric furnace while maintaining a surface temperature of the steel slab at 800 °C or more, and hold treatment was conducted at 1150 °C for 300 s. Subsequently, each of the steel slabs was removed from the electric furnace and inserted into a hot rolling mill for hot rolling.

In the hot rolling, the steel slabs were subjected to rough rolling, reheating treatment, and finish rolling in sequence to produce hot-rolled steel sheets having thicknesses of 0.6 mm, 1.0 mm, or 1.8 mm. The total rolling reduction in the rough rolling was 70.0 % to 98.0 %, and the total rolling reduction of the finish rolling was 43.8 % to 98.8 %. Further, the reheating treatment was performed using an induction heater to heat the sheet bar (steel after rough rolling) to 1100 °C.

The hot-rolled steel sheets obtained were subjected to hot-rolled sheet annealing at 1000 °C for 25 s and then cold rolled at a cold rolling reduction ratio of 80 % to produce cold-rolled steel sheets. Each of the cold-rolled steel sheets was subjected to final annealing at 980 °C for 20 s to obtain a non-oriented electrical steel sheet.

The arithmetic mean waviness Wa on the surface of the non-oriented electrical steel sheet was measured using the same procedure as in Experiment 1 above.

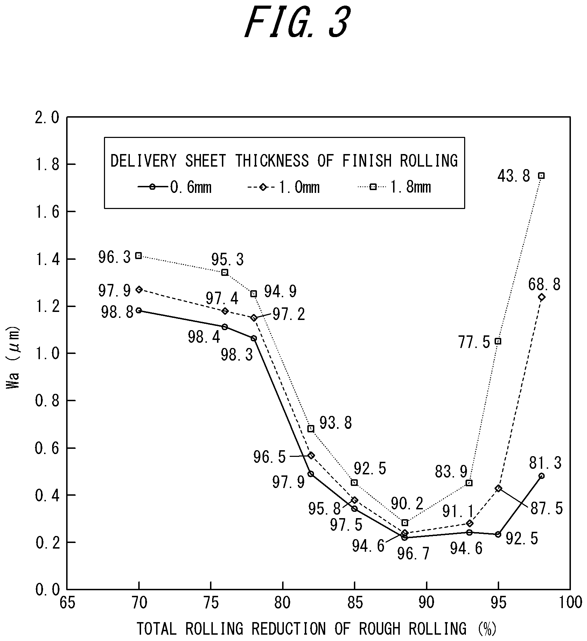

The relationship between the total rolling reduction of rough rolling and the total rolling reduction of finish rolling and the arithmetic mean waviness Wa is illustrated in FIG. 3. The three lines in FIG. 3 correspond to the results for delivery sheet thickness of finish rolling (final sheet thickness in the hot rolling process): 0.6 mm, 1.0 mm, and 1.8 mm, respectively. Further, the numerical value attached to each point is the total rolling reduction (%) of finish rolling.

As can be seen from the results illustrated in FIG. 3, ridging was suppressed when the total rolling reduction of rough rolling and the total rolling reduction of finish rolling were both 80 % or more. Further, ridging was further suppressed when the total rolling reduction of rough rolling and the total rolling reduction of finish rolling were both 88 % or more.

The results of Experiments 1 to 3 above indicate that even when the Al content and the Mn content of the steel slab is high and a process that includes hot charging is used, ridging can be suppressed by performing hold treatment under a set of conditions including a hold temperature of 1100 °C or more to 1300 °C or less and a hold time of 60 s or more, and by the total rolling reduction of rough rolling and finish rolling each being 80 % or more.

The inventors consider the reason for this discovery to be as follows. First, in steels containing N and S as impurities, the precipitation temperature of MnS and AlN increases as Al and Mn increase, while the precipitation rate of these precipitates decreases. Therefore, the precipitates may be coarsely grown by increasing the hold temperature to increase the precipitation rate and by lengthening the hold time.

Further, by increasing the total rolling reduction of rough rolling, the amount of dislocations in the sheet bar increases, the rolled microstructure of the sheet bar becomes finer, and the grain boundary density increases. These dislocations and grain boundaries are precipitation sites for MnS and AlN that were not precipitated in the hold treatment, and promote precipitation, resulting in coarse precipitate growth in the subsequent reheating treatment. Further, by increasing the total rolling reduction of finish rolling, the hot-rolled microstructure becomes finer and the density of grain boundaries, which are recrystallization sites, increases.

In this way, the coarsening of precipitates and the increase in recrystallization sites due to the refinement of the hot-rolled microstructure promote recrystallization in the hot-rolled sheet annealing, and this may be considered to suppress ridging formation.

The present disclosure is based on the above discoveries. Embodiments of the present disclosure are described in detail below. The present disclosure is not limited to the following embodiments.

### [Chemical composition]

The reasons for limiting the chemical composition of a steel slab are described.

### Si: 2.0 % to 5.0 %

Si is an element that has an effect of increasing intrinsic resistance of steel sheets and reducing iron loss. To achieve the effect, Si content is 2.0 % or more. On the other hand, when the Si content exceeds 5.0 %, rolling becomes difficult, and therefore the Si content is 5.0 % or less. From the viewpoint of balancing intrinsic resistance and workability, the Si content is preferably 2.5 % or more. The Si content is more preferably 2.8 % or more. For the same reason, the Si content is preferably 4.5 % or less. The Si content is more preferably 4.0 % or less.

### Al: 3.0 % or less

Al is an element that has an effect of increasing the intrinsic resistance of steel sheets and reducing iron loss. However, when Al content exceeds 3.0 %, rolling becomes difficult. The Al content is therefore 3.0 % or less. From the viewpoint of good castability, the Al content is preferably 1.5 % or less. A lower limit of the Al content is not limited. From the viewpoint of balance between iron loss and manufacturability, the Al content is preferably 0.2 % or more. The Al content is more preferably 0.3 % or more. The Al content is more preferably 0.5 % or more.

### Mn: 3.0 % or less

Mn is an element that has an effect of increasing the intrinsic resistance of steel sheets and further reducing iron loss. However, when the Mn content exceeds 3.0 %, operability deteriorates due to slab cracking and the like. The Mn content is therefore 3.0 % or less. From the viewpoint of suppressing the precipitation of fine MnS, the Mn content is preferably 1.5 % or less. A lower limit of Mn content is not limited. From the viewpoint of further suppressing the precipitation of fine MnS, the Mn content is preferably 0.20 % or more.

### Total content of Al and Mn: 0.40 % or more

When the total content of Al and Mn is less than 0.40 %, the precipitation temperature of precipitates becomes lower, and when the hold treatment at high temperature is applied, precipitation does not progress in the hold treatment, and ridging occurs due to fine precipitation in the subsequent hot rolling. The total content of Al and Mn is therefore 0.40 % or more. The total content of Al and Mn is preferably 1.00 % or more. The total content of Al and Mn is more preferably 1.50 % or more. An upper limit of the total content of Al and Mn is not particularly limited. However, the Al content is 3.0 % or less and the Mn content is 3.0 % or less, as mentioned above, and therefore the total content of Al and Mn is at most 6.00 %.

According to an embodiment of the present disclosure, the steel slab includes a chemical composition containing:
Si: 2.0 % or more to 5.0 % or less,
Al: 3.0 % or less, and
Mn: 3.0 % or less,
with the balance being Fe and inevitable impurity,
and the total content of Al and Mn being 0.40 % or more.

According to another embodiment of the present disclosure, the chemical composition of the steel slab may further contain at least one of the following elements.

### C: 0.005 % or less

C included in non-oriented electrical steel sheets is a harmful element that forms carbides and causes magnetic aging, which deteriorates iron loss properties. Therefore, when the steel slab includes C, the C content is 0.005 % or less. The C content is preferably 0.004 % or less. A lower limit of the C content is not particularly limited. From the viewpoint of suppressing decarburization costs in the refining process, the C content is preferably 0.0001 % or more.

### Cr: 3.0 % or less

Cr is an element that has an effect of increasing the intrinsic resistance of steel sheets and reducing iron loss. However, when Cr content exceeds 3.0 %, carbides precipitate and iron loss increases. Therefore, when Cr is added, the Cr content is 3.0 % or less. From the viewpoint of magnetic properties, the Cr content is preferably 1.5 % or less. A lower limit of Cr content is not limited. From the viewpoint of enhancing the effect of Cr addition, the Cr content is preferably 0.001 % or more. The Cr content is more preferably 0.005 % or more. The Cr content is even more preferably 0.01 % or more.

### Ni: 2.0 % or less

Ni is an element that has an effect of increasing magnetic flux density of steel sheets. However, Ni is an expensive element, and when Ni content exceeds 2.0 %, costs become very high. Therefore, when Ni is added, the Ni content is 2.0 % or less. From the viewpoint of balancing magnetic properties and cost, the Ni content is preferably 0.5 % or less. A lower limit of Ni content is not limited. From the viewpoint of enhancing the effect of Ni addition, the Ni content is preferably 0.001 % or more. The Ni content is more preferably 0.005 % or more. The Ni content is even more preferably 0.01 % or more.

### Cu: 2.0 % or less

Cu is an element that has an effect of increasing magnetic flux density of steel sheets. However, when Cu content exceeds 2.0 %, hot brittleness occurs, causing surface defects. Therefore, when Cu is added, the Cu content is 2.0 % or less. From the viewpoint of balancing magnetic properties and cost, the Cu content is preferably 0.5 % or less. A lower limit of Cu content is not limited. From the viewpoint of enhancing the effect of Cu addition, the Cu content is preferably 0.005 % or more. The Cu content is more preferably 0.01 % or more. The Cu content is even more preferably 0.05 % or more.

### P: 0.2 % or less

P is an element used to adjust steel sheet strength. However, when P content exceeds 0.2 %, steel becomes brittle and cold rolling becomes difficult. Therefore, when P is added, the P content is 0.2 % or less. From the viewpoint of balancing strength and brittleness, the P content is preferably 0.1 % or less. A lower limit of the P content is not limited. From the viewpoint of enhancing the effect of P addition, the P content is preferably 0.001 % or more. The P content is more preferably 0.005 % or more. The P content is even more preferably 0.01 % or more.

### S: 0.0050 % or less

S is an element that forms sulfides and increases iron loss. Therefore, when S is included, S content is 0.0050 % or less. The S content is preferably 0.0020 % or less. The S content is more preferably 0.0010 % or less. From the viewpoint of iron loss, the lower the S content, the better, and therefore a lower limit of the S content is not limited and may be 0 %. However, S is an element that inevitably mixes into steel as an impurity, and excessive reduction leads to increased production costs. Therefore, from a cost viewpoint, the S content is preferably 0.0001 % or more. The S content is more preferably 0.0005 % or more.

### N: 0.0050 % or less

N is an element that forms nitrides and increases iron loss. Therefore, when N is included, N content is 0.0050 % or less. The N content is preferably 0.0030 % or less. The N content is more preferably 0.0020 % or less. From the viewpoint of iron loss, the lower the N content, the better, and therefore a lower limit of the N content is not limited and may be 0 %. However, N is an element that inevitably mixes into steel as an impurity, and excessive reduction leads to increased production costs. Therefore, from a cost viewpoint, the N content is preferably 0.0001 % or more. The N content is more preferably 0.0005 % or more.

### O: 0.0050 % or less

O is an element that forms oxides and increases iron loss. Therefore, when O is included, O content is 0.0050 % or less. The O content is preferably 0.0020 % or less. The O content is more preferably 0.0010 % or less. From the viewpoint of iron loss, the lower the O content, the better, and therefore a lower limit of the O content is not limited and may be 0 %. However, O is an element that inevitably mixes into steel as an impurity, and excessive reduction leads to increased production costs. Therefore, from a cost viewpoint, the O content is preferably 0.0005 % or more. The O content is more preferably 0.001 % or more.

### Ti: 0.0040 % or less

Ti is an element that forms carbonitrides and increases iron loss. Therefore, when Ti is included, Ti content is 0.0040 % or less. The Ti content is preferably 0.0020 % or less. The Ti content is more preferably 0.0010 % or less. From the viewpoint of iron loss, the lower the Ti content, the better, and therefore a lower limit of the Ti content is not limited and may be 0 %. However, Ti is an element that inevitably mixes into steel as an impurity, and excessive reduction leads to increased production costs. Therefore, from a cost viewpoint, the Ti content is preferably 0.0001 % or more. The Ti content is more preferably 0.0005 % or more.

### Sn: 0.20 % or less

Sn is an element that has an effect of suppressing nitridation and oxidation of the surface layer and reducing iron loss. However, the effect saturates when added in excess of 0.20 %, and therefore when Sn is added, Sn content is 0.20 % or less. The Sn content is preferably 0.10 % or less. From the viewpoint of enhancing the effect, the Sn content is preferably 0.005 % or more.

### Sb: 0.20 % or less

Sb is an element that has an effect of suppressing nitridation and oxidation of the surface layer and reducing iron loss. However, the effect saturates when added in excess of 0.20 %, and therefore when Sb is added, Sb content is 0.20 % or less. The Sn content is preferably 0.10 % or less. From the viewpoint of enhancing the effect, the Sb content is preferably 0.005 % or more.

### Mo: 0.10 % or less

Mo is an element that has an effect of suppressing nitridation and oxidation of the surface layer and reducing iron loss. However, when added in excess of 0.10 %, iron loss increases. Therefore, when Mo is added, Mo content is 0.10 % or less. The Mo content is preferably 0.05 % or less. From the viewpoint of enhancing the effect, the Mo content is preferably 0.001 % or more.

### Ca: 0.01 % or less

Ca is an element that suppresses formation of fine oxides and sulfides and reduces iron loss. However, the effect saturates when added in excess of 0.01 %. Therefore, when Ca is added, Ca content is 0.01 % or less. The Ca content is preferably 0.006 % or less. From the viewpoint of enhancing the effect, the Ca content is preferably 0.001 % or more.

### REM: 0.05 % or less

REM (rare earth metals) are elements that suppress formation of fine sulfides and reduce iron loss. However, the effect saturates when added in excess of 0.05 %. Therefore, when a REM is added, REM content is 0.05 % or less. The REM content is preferably 0.03 % or less. From the viewpoint of enhancing the effect, the REM content is preferably 0.005 % or more.

### Mg: 0.01 % or less

Mg is an element that suppresses formation of fine sulfides and reduces iron loss. However, the effect saturates when added in excess of 0.01 %. Therefore, when Mg is added, Mg content is 0.01 % or less. The Mg content is preferably 0.006 % or less. From the viewpoint of enhancing the effect, the Mg content is preferably 0.001 % or more.

### Zn: 0.01 % or less

Zn is an element that suppresses formation of fine oxides and sulfides and reduces iron loss. However, the effect saturates when added in excess of 0.01 %. Therefore, when Zn is added, Zn content is 0.01 % or less. The Zn content is preferably 0.005 % or less. From the viewpoint of enhancing the effect, the Zn content is preferably 0.001 % or more.

### [Production conditions for hot-rolled steel sheet for non-oriented electrical steel sheet]

Next, the production conditions for producing a hot-rolled steel sheet for a non-oriented electrical steel sheet using a steel slab including the above chemical composition are described.

The method of producing a hot-rolled steel sheet for a non-oriented electrical steel sheet according to an embodiment of the present disclosure includes: a continuous casting process of producing a steel slab by continuous casting; a transfer process of transferring the steel slab to a furnace while maintaining a surface temperature of the steel slab at 800 °C or more; a hold process of holding the steel slab in the furnace under a set of conditions including a hold temperature of 1100 °C or more to 1300 °C or less and a hold time of 60 s or more; and a hot rolling process of subjecting the steel slab to rough rolling, reheating treatment, and finish rolling in sequence to obtain a hot-rolled steel sheet. The following describes each of the processes.

### • Continuous casting process

First, a steel slab having the chemical composition described above is produced by continuous casting (continuous casting process). The method of continuous casting is not particularly limited and may be a conventional method. A method of adjusting the composition of molten steel used for continuous casting is also not particularly limited and may be any method. For example, a converter, an electric furnace, a vacuum degasser, and other devices and methods may be used to adjust the composition of the molten steel.

### Steel slab thickness: 50 mm to 200 mm

The continuous casting process produces a steel slab having a thickness of 50 mm or more and 200 mm or less. When the thickness of the steel slab is less than 50 mm, the rolling reduction of rough rolling and finish rolling in the hot rolling process cannot be sufficiently achieved, and recrystallization in the hot-rolled sheet annealing is inhibited. The thickness of the steel slab is therefore 50 mm or more. From the viewpoint of suppressing a drop in slab temperature between the continuous casting process and the hold process, the thickness of the steel slab is preferably 100 mm or more. Further, from the viewpoint of securing sufficient rolling reduction in rough rolling and finish rolling, the thickness of the steel slab is more preferably 140 mm or more. However, when the thickness of the steel slab exceeds 200 mm, the rolling load in the hot rolling process increases, causing the rolling mill to become longer and more costly. The thickness of the steel slab is therefore 200 mm or less.

### • Transfer process

Next, the steel slab produced in the continuous casting process is transferred to the furnace used for the hold treatment (transfer process). In the transfer process, maintaining the surface temperature of the steel slab at 800 °C or more is important. In other words, according to the present disclosure, the steel slab is transferred so that surface temperature of the steel does not fall below 800 °C between production in the continuous casting process and reaching the furnace. When the surface temperature of the steel slab becomes less than 800 °C, the energy required to reheat the steel slab increases, and an energy saving effect is not achieved.

Methods to suppress the drop in surface temperature of the steel slab during the transfer process are not particularly limited. For example, the drop in surface temperature may be suppressed by increasing casting velocity or increasing slab thickness.

In the transfer process, the steel slab may be cut and then transferred to the furnace. However, from the viewpoint of suppressing the temperature drop of the slab, transferring the steel slab directly to the furnace (hold facility) without cutting is preferable.

### • Hold process

Next, the steel slab is held in the furnace under a set of conditions including a hold temperature of 1100 °C or more to 1300 °C or less and a hold time of 60 s or more (hold process). Hold treatment promotes the precipitation and coarsening of MnS and AlN, which in turn promotes recrystallization in the hot-rolled sheet annealing process when producing a non-oriented electrical steel sheet.

### Hold temperature: 1100 °C to 1300 °C

When the hold temperature is less than 1100 °C, coarsening of precipitates is not promoted and the precipitates remain fine in the slab. As a result, recrystallization in the hot-rolled sheet annealing is inhibited, and ridging is likely to occur. The hold temperature is therefore 1100 °C or more. The hold temperature is preferably 1150 °C or more. However, when the hold temperature is higher than 1300 °C, precipitation of precipitates does not progress, and MnS and AlN are micro-precipitated during hot rolling after holding. As a result, recrystallization in the hot-rolled sheet annealing is inhibited, and ridging is likely to occur. The hold temperature is therefore 1300 °C or less. The hold temperature is preferably 1250 °C or less.

### Hold time: 60 s or more

When the hold time is less than 60 s, precipitation and coarsening of MnS and AlN do not progress, and ridging is likely to occur. The hold time is therefore 60 s or more. The hold time is preferably 300 s or more. An upper limit of hold time is not particularly limited. Exceeding 3600 s increases the construction cost of the facility in addition to saturating the effect. The hold time is therefore preferably 3600 s or less. The hold time is more preferably 2400 s or less. The hold time is even more preferably 2000 s or less.

The heating method in the hold treatment is not particularly limited, and any method may be used, such as using induction heating, a gas furnace, an electric furnace, and the like. However, when a gas furnace is used, combustion gases produce scale on the surface of steel sheets. Therefore, from the viewpoint of suppressing scale formation and suppressing CO₂ emissions, use of induction heating or an electric furnace is preferred, which are heating methods that use electrical energy. Of these, an electric furnace is suitable for heating steel slabs continuously for long periods of time, and has a low construction cost. Therefore, use of an electric furnace for the hold treatment is preferred.

### • Hot rolling

The steel slab is then subjected to rough rolling, reheating treatment, and finish rolling in sequence to obtain a hot-rolled steel sheet (hot rolling process). According to the present disclosure, conducting the hot rolling process under a set of conditions that satisfy the following (1) and (2) is important.
(1) total rolling reduction of rough rolling: 80 % or more
(2) total rolling reduction of finish rolling: 80 % or more

### Total rolling reduction of rough rolling: 80 % or more

When the total rolling reduction of rough rolling is less than 80 %, precipitation promotion of MnS and AlN due to dislocation introduction is insufficient, and precipitate coarsening in the subsequent reheating treatment does not occur. Further, grain boundary density after hot rolling is not sufficiently refined. As a result, recrystallization is not promoted during the hot-rolled sheet annealing when producing a non-oriented electrical steel sheet, and ridging is likely to occur. The total rolling reduction of rough rolling is therefore 80 % or more. The total rolling reduction of rough rolling is preferably 88 % or more. The total rolling reduction of rough rolling is more preferably 91 % or more. In particular, when the total rolling reduction of rough rolling is 91 %, deformed microstructure after rough rolling becomes extremely fine, and the density in the thickness direction of grain boundaries, which are precipitation sites for MnS and AlN, increases significantly. As a result, the precipitation of MnS and AlN can be promoted very effectively. Here, the total rolling reduction of rough rolling is the rolling reduction calculated from the sheet thickness before the start of rough rolling (steel slab thickness) and the sheet thickness after the end of rough rolling (delivery sheet thickness). The number of rough rolling passes is not particularly limited and may be any number of passes that is one or more.

### Total rolling reduction of finish rolling: 80 % or more

Further, when the total rolling reduction of finish rolling is less than 80 %, grain boundary density after hot rolling is not sufficiently refined, and recrystallization is not promoted in the hot-rolled sheet annealing, making ridging likely to occur. The total rolling reduction of finish rolling is therefore 80 % or more. The total rolling reduction of finish rolling is preferably 88 % or more. The total rolling reduction of finish rolling is more preferably 91 % or more. In particular, when the total rolling reduction of finish rolling is 91 % or more, the number of dislocations remaining in the steel sheet after hot rolling is significantly increased, in addition to a significant increase in grain boundary density after hot rolling. As a result, recrystallization in the hot-rolled sheet annealing is more likely to occur, and ridging can be suppressed more effectively. The total rolling reduction of finish rolling is the rolling reduction calculated from the sheet thickness before the start of finish rolling and the sheet thickness after the end of finish rolling (delivery sheet thickness). The number of finish rolling passes is not particularly limited and may be any number of passes that is one or more.

Further, from the viewpoint of further promoting the precipitation of MnS and AlN and further enhancing the effect of ridging suppression, the total rolling reduction of rough rolling is preferably greater than the total rolling reduction of finish rolling.

In a conventional process using reheating rolling, the cast steel slab is temporarily cooled to near room temperature, and therefore AlN and MnS precipitate during cooling or reheating due to the large degree of undercooling, and the precipitates coarsen during reheating. Therefore, in the case of reheating rolling, there is no need to control the rolling reduction of hot rolling to suppress ridging.

However, in the case of a process in which the cast steel slab is subjected to hot rolling while maintained at a high temperature (hot charging), as in the present disclosure, precipitation and coarsening of AlN and MnS do not progress from casting to hot rolling. Therefore, even when hold treatment is applied, the effect of ridging suppression cannot be sufficiently achieved, unless the rolling reduction of rough rolling and finish rolling is increased to promote recrystallization in the hot-rolled sheet annealing. That is, the limitation of the rolling reduction according to the present disclosure is intended to solve the problem of ridging inherent in the case of hot charging, and is based on a novel conception that is completely different from conventional control of rolling reduction in reheating rolling.

Between the rough rolling and the finish rolling, reheating treatment is performed. The reheating treatment is necessary to suppress ridging due to coarsening precipitates that have precipitated finely during rough rolling. Further, the reheating treatment may be used to raise the temperature of the material and lower deformation resistance during finish rolling.

The reheating temperature in the reheating treatment is not particularly limited. The reheating temperature is preferably 950 °C or more. The reheating temperature is more preferably 1050 °C or more. An upper limit of the reheating temperature is also not particularly limited, but an excessively high reheating temperature results in saturation of the effect as well as a decrease in energy efficiency. The reheating temperature in the reheating treatment is therefore preferably 1300 °C or less. The reheating temperature in the reheating treatment is more preferably 1200 °C or less. The heating method in the reheating treatment is not particularly limited, and any method may be used, such as using induction heating, a gas furnace, an electric furnace, and the like.

The delivery sheet thickness of finish rolling (sheet thickness of the hot-rolled steel sheet finally obtained) is not particularly limited and may be any thickness. However, when the delivery sheet thickness is less than 0.4 mm, the overall length of the steel sheet becomes excessively long, reducing productivity. Therefore, from the viewpoint of productivity, the delivery sheet thickness of the finish rolling is preferably 0.4 mm or more. On the other hand, when the delivery sheet thickness exceeds 2.0 mm, the cold rolling load increases. Therefore, from the viewpoint of reducing the cold rolling load, the delivery sheet thickness of the finish rolling is preferably 2.0 mm or less. From the viewpoint of reducing the cold rolling load even when the final sheet thickness after cold rolling is thin, the delivery sheet thickness is more preferably 1.5 mm or less.

### (Production conditions of non-oriented electrical steel sheet)

The method of producing a non-oriented electrical steel sheet according to an embodiment of the present disclosure includes: a hot-rolled steel sheet production process producing a hot-rolled steel sheet according to the method of production described above; a hot-rolled sheet annealing process of annealing the hot-rolled steel sheet; a cold rolling process of cold rolling the hot-rolled steel sheet to obtain a cold-rolled steel sheet; and a final annealing process of final annealing the cold-rolled steel sheet.

The above processes of hot-rolled sheet annealing, cold rolling, and final annealing are not particularly limited and may be performed according to conventional methods.

After the hot-rolled sheet annealing, prior to the cold rolling, performing pickling is preferable. Further, forming an insulating coating on the surface of the non-oriented electrical steel sheet after the final annealing is preferable. The pickling and formation of insulating coating are not particularly limited and may be performed according to conventional methods.

### EXAMPLES

### (Examples 1)

Steel slabs each having a thickness of 60 mm and a chemical composition consisting of C: 0.002 %, Si: 3.2 %, Al: 0.60 %, Mn: 0.50 %, S: 0.0010 %, N: 0.0015 %, O: 0.0010 %, Cr: 0.02 %, Ni: 0.01 %, Cu: 0.02 %, P: 0.01 %, and Ti: 0.001 %, with the balance being Fe and inevitable impurity, were produced by continuous casting. The steel slabs were each transferred to a tunnel-type electric furnace without cutting and with the surface temperature of the slab maintained at 800 °C or more, and hold treatment was performed in the electric furnace. The hold temperature and the hold time of the hold treatment were as listed in Table 1. For comparison, hold treatment was not performed for some Examples.

The steel slabs were then hot rolled, consisting of three passes of rough rolling, reheating treatment, and four passes of finish rolling, under the conditions listed in Table 1, to obtain hot-rolled steel sheets. In the reheating treatment, the slab immediately after rough rolling was reheated using an induction heating method. For comparison, the reheating treatment was omitted for some Examples.

After finish rolling, the hot-rolled steel sheets were continuously wound into coils to obtain hot-rolled coils, and the hot-rolled coils were subjected to hot-rolled sheet annealing at 1030 °C for 40 s to obtain hot-rolled and annealed sheets. The hot-rolled and annealed sheets were then cold rolled at a rolling reduction of 85 % to obtain cold-rolled steel sheets. The cold-rolled steel sheets were then subjected to final annealing at 1000 °C for 15 s to obtain non-oriented electrical steel sheets.

In order to evaluate ridging on the surface of the non-oriented electrical steel sheet, arithmetic mean waviness (Wa) of the surface of the non-oriented electrical steel sheet was measured. In measuring the arithmetic mean waviness Wa, a stylus-type surface roughness meter was used, and the arithmetic mean waviness Wa was calculated from a waviness curve obtained by measuring the steel sheet surface with a measuring length of 16 mm in the sheet transverse direction. The measurement results are listed in Table 1.

As can be seen from the results listed in Table 1, the arithmetic mean waviness Wa was reduced and ridging was suppressed in the Examples that satisfied the conditions of the present disclosure.

### [Table 1]

**Table 1**

| No. | Hold process | | Hot rolling process | | | | | Evaluation result | Remarks |
|---|---|---|---|---|---|---|---|---|---|
| | Hold temp. [°C] | Hold time [s] | Rough rolling | | Reheating treatment | Finish rolling | | Wa [µm] | |
| | | | Delivery sheet thickness [mm] | Total rolling reduction [%] | Heating temp. [°C] | Delivery sheet thickness [mm] | Total rolling reduction [%] | | |
| 1 | - | - | 8.0 | 86.7 | 1050 | 1.0 | 87.5 | 2.98 | Comparative Example |
| 2 | 1000 | 60 | 8.0 | 86.7 | 1050 | 1.0 | 87.5 | 2.46 | Comparative Example |
| 3 | 1080 | 60 | 8.0 | 86.7 | 1050 | 1.0 | 87.5 | 1.13 | Comparative Example |
| 4 | 1100 | 40 | 8.0 | 86.7 | 1050 | 1.0 | 87.5 | 1.08 | Comparative Example |
| 5 | 1100 | 60 | 8.0 | 86.7 | 1050 | 1.0 | 87.5 | 0.87 | Example |
| 6 | 1100 | 600 | 8.0 | 86.7 | 1050 | 1.0 | 87.5 | 0.55 | Example |
| 7 | 1100 | 1200 | 8.0 | 86.7 | 1050 | 1.0 | 87.5 | 0.48 | Example |
| 8 | 1100 | 1800 | 8.0 | 86.7 | 1050 | 1.0 | 87.5 | 0.43 | Example |
| 9 | 1200 | 600 | 8.0 | 86.7 | 1050 | 1.0 | 87.5 | 0.46 | Example |
| 10 | 1300 | 600 | 8.0 | 86.7 | 1050 | 1.0 | 87.5 | 0.87 | Example |
| 11 | 1320 | 600 | 8.0 | 86.7 | 1050 | 1.0 | 87.5 | 1.17 | Comparative Example |
| 12 | 1150 | 600 | 15.0 | 75.0 | 1050 | 1.0 | 93.3 | 1.34 | Comparative Example |
| 13 | 1150 | 600 | 11.0 | 81.7 | 1050 | 1.0 | 90.9 | 0.79 | Example |
| 14 | 1150 | 600 | 4.5 | 92.5 | 1050 | 1.0 | 77.8 | 1.23 | Comparative Example |
| 15 | 1150 | 600 | 8.0 | 86.7 | - | 1.0 | 87.5 | 1.37 | Comparative Example |
| 16 | 1150 | 600 | 8.0 | 86.7 | 900 | 1.0 | 87.5 | 0.62 | Example |
| 17 | 1150 | 600 | 8.0 | 86.7 | 1000 | 1.0 | 87.5 | 0.54 | Example |
| 18 | 1150 | 600 | 8.0 | 86.7 | 1100 | 1.0 | 87.5 | 0.51 | Example |
| 19 | 1150 | 600 | 8.0 | 86.7 | 1150 | 1.0 | 87.5 | 0.45 | Example |
| 20 | 1150 | 600 | 6.5 | 89.2 | 1050 | 0.6 | 90.8 | 0.28 | Example |
| 21 | 1150 | 600 | 5.0 | 91.7 | 1050 | 0.4 | 92.0 | 0.26 | Example |
| 22 | 1150 | 600 | 8.0 | 86.7 | 1050 | 1.4 | 82.5 | 0.38 | Example |
| 23 | 1150 | 600 | 6.0 | 90.0 | 1000 | 1.0 | 83.3 | 0.43 | Example |
| 24 | 1150 | 600 | 4.0 | 93.3 | 1050 | 0.4 | 90.0 | 0.21 | Example |
| 25 | 1150 | 600 | 4.5 | 92.5 | 1050 | 0.9 | 80.0 | 0.42 | Example |
| 26 | 1150 | 600 | 4.5 | 92.5 | 1050 | 0.6 | 86.7 | 0.30 | Example |
| 27 | 1150 | 600 | 4.5 | 92.5 | 1050 | 0.5 | 88.9 | 0.27 | Example |

### (Examples 2)

Steel slabs each having a thickness of 160 mm and a chemical composition consisting of C: 0.002 %, Si: 3.0 %, Al: 1.3 %, Mn: 0.40 %, S: 0.0005 %, N: 0.0015 %, O: 0.0010 %, Cr: 0.10 %, Ni: 0.15 %, Cu: 0.18 %, P: 0.02 %, and Ti: 0.0015 %, with the balance being Fe and inevitable impurity, were produced by continuous casting. The steel slabs were each transferred to a tunnel-type gas furnace without cutting and with the surface temperature of the slab maintained at 800 °C or more, and hold treatment was performed in the gas furnace. The hold temperature and the hold time of the hold treatment were as listed in Table 2. For comparison, hold treatment was not performed for some Examples.

The steel slabs were then hot rolled, consisting of four passes of rough rolling, reheating treatment, and five passes of finish rolling, under the conditions listed in Table 2, to obtain hot-rolled steel sheets. In the reheating treatment, the slab immediately after rough rolling was reheated using an induction heating method. For comparison, the reheating treatment was omitted for some Examples.

After finish rolling, the hot-rolled steel sheets were continuously wound into coils to obtain hot-rolled coils, and the hot-rolled coils were subjected to hot-rolled sheet annealing at 1020 °C for 30 s to obtain hot-rolled and annealed sheets. The hot-rolled and annealed sheets were then cold rolled at a rolling reduction of 85 % to obtain cold-rolled steel sheets. The cold-rolled steel sheets were then subjected to final annealing at 1000 °C for 15 s to obtain non-oriented electrical steel sheets.

In order to evaluate ridging on the surface of the non-oriented electrical steel sheet, arithmetic mean waviness (Wa) of the surface of the non-oriented electrical steel sheet was measured in the same way as for Examples 1, above. The measurement results are listed in Table 2.

As can be seen from the results listed in Table 2, the arithmetic mean waviness Wa was reduced and ridging was suppressed in the Examples that satisfied the conditions of the present disclosure.

### [Table 2]

**Table 2**

| No. | Hold process | | Hot rolling process | | | | | Evaluation result | Remarks |
|---|---|---|---|---|---|---|---|---|---|
| | Hold temp. [°C] | Hold time [s] | Rough rolling | | Reheating treatment | Finish rolling | | Wa [µm] | |
| | | | Delivery sheet thickness [mm] | Total rolling reduction [%] | Heating temp. [°C] | Delivery sheet thickness [mm] | Total rolling reduction [%] | | |
| 28 | - | - | 20.0 | 87.5 | 1050 | 2.5 | 87.5 | 3.06 | Comparative Example |
| 29 | 1000 | 60 | 20.0 | 87.5 | 1050 | 2.5 | 87.5 | 2.52 | Comparative Example |
| 30 | 1080 | 60 | 20.0 | 87.5 | 1050 | 2.5 | 87.5 | 1.13 | Comparative Example |
| 31 | 1100 | 40 | 20.0 | 87.5 | 1050 | 2.5 | 87.5 | 0.89 | Comparative Example |
| 32 | 1100 | 60 | 20.0 | 87.5 | 1050 | 2.5 | 87.5 | 0.92 | Example |
| 33 | 1100 | 600 | 20.0 | 87.5 | 1050 | 2.5 | 87.5 | 0.55 | Example |
| 34 | 1100 | 1200 | 20.0 | 87.5 | 1050 | 2.5 | 87.5 | 0.39 | Example |
| 35 | 1100 | 1800 | 20.0 | 87.5 | 1050 | 2.5 | 87.5 | 0.50 | Example |
| 36 | 1200 | 600 | 20.0 | 87.5 | 1050 | 2.5 | 87.5 | 0.46 | Example |
| 37 | 1300 | 600 | 20.0 | 87.5 | 1050 | 2.5 | 87.5 | 0.93 | Example |
| 38 | 1320 | 600 | 20.0 | 87.5 | 1050 | 2.5 | 87.5 | 0.96 | Comparative Example |
| 39 | 1150 | 600 | 35.0 | 78.1 | 1050 | 2.5 | 92.9 | 1.32 | Comparative Example |
| 40 | 1150 | 600 | 30.0 | 81.3 | 1050 | 2.5 | 91.7 | 0.87 | Example |
| 41 | 1150 | 600 | 12.0 | 92.5 | 1050 | 2.5 | 79.2 | 1.29 | Comparative Example |
| 42 | 1150 | 600 | 20.0 | 87.5 | - | 2.5 | 87.5 | 1.25 | Comparative Example |
| 43 | 1150 | 600 | 20.0 | 87.5 | 900 | 2.5 | 87.5 | 0.58 | Example |
| 44 | 1150 | 600 | 20.0 | 87.5 | 1000 | 2.5 | 87.5 | 0.58 | Example |
| 45 | 1150 | 600 | 20.0 | 87.5 | 1100 | 2.5 | 87.5 | 0.56 | Example |
| 46 | 1150 | 600 | 20.0 | 87.5 | 1150 | 2.5 | 87.5 | 0.40 | Example |
| 47 | 1150 | 600 | 18 | 88.8 | 1050 | 2.0 | 88.9 | 0.24 | Example |
| 48 | 1150 | 600 | 10 | 93.8 | 1050 | 1.0 | 90.0 | 0.23 | Example |
| 49 | 1150 | 600 | 20.0 | 87.5 | 1050 | 3.0 | 85.0 | 0.47 | Example |
| 50 | 1150 | 600 | 15.0 | 90.6 | 1000 | 2.5 | 83.3 | 0.41 | Example |
| 51 | 1150 | 600 | 12 | 92.5 | 1000 | 2.0 | 83.3 | 0.38 | Example |
| 52 | 1150 | 600 | 12 | 92.5 | 1000 | 1.5 | 87.5 | 0.34 | Example |
| 53 | 1150 | 600 | 12 | 92.5 | 1000 | 1.4 | 88.3 | 0.27 | Example |
| 54 | 1150 | 600 | 9 | 94.4 | 1000 | 1.5 | 83.3 | 0.32 | Example |
| 55 | 1150 | 600 | 9 | 94.4 | 1000 | 1.2 | 86.7 | 0.28 | Example |
| 56 | 1150 | 600 | 9 | 94.4 | 1000 | 1 | 88.9 | 0.23 | Example |

### (Examples 3)

Steel slabs each having a thickness of 190 mm and a chemical composition consisting of C: 0.002 %, Si: 3.4 %, Al: 0.3 %, Mn: 0.60 %, S: 0.0008 %, N: 0.010 %, O: 0.0010 %, Cr: 0.015 %, Ni: 0.015 %, Cu: 0.03 %, P: 0.015 %, and Ti: 0.0015 %, with the balance being Fe and inevitable impurity, were produced by continuous casting. The steel slabs were each transferred to a tunnel-type gas furnace without cutting and with the surface temperature of the slab maintained at 800 °C or more, and hold treatment was performed in the gas furnace. The hold temperature and the hold time of the hold treatment were as listed in Table 3. For comparison, hold treatment was not performed for some Examples.

The steel slabs were then hot rolled, consisting of four passes of rough rolling, reheating treatment, and five passes of finish rolling, under the conditions listed in Table 3, to obtain hot-rolled steel sheets. In the reheating treatment, the slab immediately after rough rolling was reheated using an induction heating method. For comparison, the reheating treatment was omitted for some Examples.

After finish rolling, the hot-rolled steel sheets were continuously wound into coils to obtain hot-rolled coils, and the hot-rolled coils were subjected to hot-rolled sheet annealing at 1050 °C for 20 s to obtain hot-rolled and annealed sheets. The hot-rolled and annealed sheets were then cold rolled at a rolling reduction of 85 % to obtain cold-rolled steel sheets. The cold-rolled steel sheets were then subjected to final annealing at 1000 °C for 15 s to obtain non-oriented electrical steel sheets.

In order to evaluate ridging on the surface of the non-oriented electrical steel sheet, arithmetic mean waviness (Wa) of the surface of the non-oriented electrical steel sheet was measured in the same way as for Examples 1, above. The measurement results are listed in Table 3.

As can be seen from the results listed in Table 3, the arithmetic mean waviness Wa was reduced and ridging was suppressed in the Examples that satisfied the conditions of the present disclosure.

### [Table 3]

**Table 3**

| No. | Hold process | | Hot rolling process | | | | | Evaluation result | Remarks |
|---|---|---|---|---|---|---|---|---|---|
| | Hold temp. [°C] | Hold time [s] | Rough rolling | | Reheating treatment | Finish rolling | | Wa [µm] | |
| | | | Delivery sheet thickness [mm] | Total rolling reduction [%] | Heating temp. [°C] | Delivery sheet thickness [mm] | Total rolling reduction [%] | | |
| 57 | - | - | 25.0 | 86.8 | 1050 | 2.5 | 90.0 | 2.71 | Comparative Example |
| 58 | 1000 | 60 | 25.0 | 86.8 | 1050 | 2.5 | 90.0 | 2.28 | Comparative Example |
| 59 | 1080 | 60 | 25.0 | 86.8 | 1050 | 2.5 | 90.0 | 1.20 | Comparative Example |
| 60 | 1100 | 40 | 25.0 | 86.8 | 1050 | 2.5 | 90.0 | 1.24 | Comparative Example |
| 61 | 1100 | 60 | 25.0 | 86.8 | 1050 | 2.5 | 90.0 | 0.95 | Example |
| 62 | 1100 | 600 | 25.0 | 86.8 | 1050 | 2.5 | 90.0 | 0.63 | Example |
| 63 | 1100 | 1200 | 25.0 | 86.8 | 1050 | 2.5 | 90.0 | 0.39 | Example |
| 64 | 1100 | 1800 | 25.0 | 86.8 | 1050 | 2.5 | 90.0 | 0.39 | Example |
| 65 | 1200 | 600 | 25.0 | 86.8 | 1050 | 2.5 | 90.0 | 0.55 | Example |
| 66 | 1300 | 600 | 25.0 | 86.8 | 1050 | 2.5 | 90.0 | 1.02 | Example |
| 67 | 1320 | 600 | 25.0 | 86.8 | 1050 | 2.5 | 90.0 | 0.97 | Comparative Example |
| 68 | 1150 | 600 | 40.0 | 78.9 | 1050 | 3.0 | 92.5 | 1.51 | Comparative Example |
| 69 | 1150 | 600 | 35.0 | 81.6 | 1050 | 2.5 | 92.9 | 0.66 | Example |
| 70 | 1150 | 600 | 12.0 | 93.7 | 1050 | 2.5 | 79.2 | 1.28 | Comparative Example |
| 71 | 1150 | 600 | 25.0 | 86.8 | - | 2.5 | 90.0 | 1.45 | Comparative Example |
| 72 | 1150 | 600 | 25.0 | 86.8 | 900 | 2.5 | 90.0 | 0.54 | Example |
| 73 | 1150 | 600 | 25.0 | 86.8 | 1000 | 2.5 | 90.0 | 0.61 | Example |
| 74 | 1150 | 600 | 25.0 | 86.8 | 1100 | 2.5 | 90.0 | 0.43 | Example |
| 75 | 1150 | 600 | 25.0 | 86.8 | 1150 | 2.5 | 90.0 | 0.54 | Example |
| 76 | 1150 | 600 | 20 | 89.5 | 1050 | 1.5 | 92.5 | 0.27 | Example |
| 77 | 1150 | 600 | 15 | 92.1 | 1050 | 1.0 | 93.3 | 0.23 | Example |
| 78 | 1100 | 600 | 25.0 | 86.8 | 1050 | 4.0 | 84.0 | 0.56 | Example |
| 79 | 1100 | 600 | 18.0 | 90.5 | 1050 | 2.5 | 86.1 | 0.49 | Example |
| 80 | 1150 | 600 | 11.0 | 94.2 | 1050 | 1.0 | 90.9 | 0.18 | Example |
| 81 | 1100 | 600 | 15 | 92.1 | 1050 | 2.0 | 86.7 | 0.37 | Example |
| 82 | 1100 | 600 | 15 | 92.1 | 1050 | 1.5 | 90.0 | 0.29 | Example |
| 83 | 1100 | 600 | 15 | 92.1 | 1050 | 1.0 | 93.3 | 0.24 | Example |
| 84 | 1100 | 600 | 20 | 89.5 | 1050 | 2.5 | 87.5 | 0.39 | Example |
| 85 | 1100 | 600 | 20 | 89.5 | 1050 | 2.0 | 90.0 | 0.31 | Example |
| 86 | 1100 | 600 | 20 | 89.5 | 1050 | 1.5 | 92.5 | 0.27 | Example |

### (Examples 4)

Steel slabs each having a thickness of 150 mm and the chemical compositions listed in Tables 4 to 6 were produced by continuous casting. The steel slabs were each transferred to a tunnel-type gas furnace without cutting and with the surface temperature of the slab maintained at 800 °C or more, and hold treatment was performed in the gas furnace. The hold temperature of the hold treatment was 1150 °C and the hold time was 1500 s.

The steel slabs were then hot rolled, consisting of four passes of rough rolling, reheating treatment, and five passes of finish rolling, to obtain hot-rolled steel sheets. The total rolling reduction in the rough rolling was 90.0 %, and the total rolling reduction of the finish rolling was 93.3 %. Further, in the reheating treatment, the slab immediately after rough rolling was reheated to 1100 °C using an induction heating method.

After finish rolling, the hot-rolled steel sheets were continuously wound into coils to obtain hot-rolled coils, and the hot-rolled coils were subjected to hot-rolled sheet annealing at 1050 °C for 20 s to obtain hot-rolled and annealed sheets. The hot-rolled and annealed sheets were then cold rolled at a rolling reduction of 80 % to obtain cold-rolled steel sheets having a sheet thickness of 0.20 mm. The cold-rolled steel sheets were then subjected to final annealing at 1000 °C for 20 s to obtain non-oriented electrical steel sheets.

In order to evaluate ridging on the surface of the non-oriented electrical steel sheet, arithmetic mean waviness (Wa) of the surface of the non-oriented electrical steel sheet was measured in the same way as for Examples 1, above. The measurement results are listed in Tables 4 to 6.

As can be seen from the results listed in Tables 4 to 6, the arithmetic mean waviness Wa was reduced and ridging was suppressed in the Examples that satisfied the conditions of the present disclosure.

### [Table 4]

**Table 4**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | S | N | O | Cr | Ni | Cu | P | Ti | Other | Wa [µm] | Remarks |
| 87 | 0.0045 | 3.0 | 0.5 | 0.5 | 1.00 | 0.0015 | 0.002 | 0.001 | 0.01 | 0.01 | 0.02 | 0.01 | 0.001 | - | 0.31 | Example |
| 88 | 0.002 | 2.1 | 0.5 | 0.5 | 1.00 | 0.0015 | 0.002 | 0.001 | 0.01 | 0.01 | 0.02 | 0.01 | 0.001 | - | 0.49 | Example |
| 89 | 0.002 | 3.4 | 0.5 | 0.5 | 1.00 | 0.0015 | 0.002 | 0.001 | 0.01 | 0.01 | 0.02 | 0.01 | 0.001 | - | 0.39 | Example |
| 90 | 0.002 | 4.0 | 0.5 | 0.5 | 1.00 | 0.0015 | 0.002 | 0.001 | 0.01 | 0.01 | 0.02 | 0.01 | 0.001 | - | 0.38 | Example |
| 91 | 0.002 | 4.5 | 0.5 | 0.5 | 1.00 | 0.0015 | 0.002 | 0.001 | 0.01 | 0.01 | 0.02 | 0.01 | 0.001 | - | 0.41 | Example |
| 92 | 0.002 | 3.0 | 0.2 | 0.15 | 0.35 | 0.0015 | 0.002 | 0.001 | 0.01 | 0.01 | 0.02 | 0.01 | 0.001 | - | 1.18 | Comparative Example |
| 93 | 0.002 | 2.8 | 0.2 | 0.25 | 0.45 | 0.0015 | 0.002 | 0.001 | 0.01 | 0.01 | 0.02 | 0.01 | 0.001 | - | 0.87 | Example |
| 94 | 0.002 | 2.8 | 0.5 | 0.5 | 1.00 | 0.0015 | 0.002 | 0.001 | 0.01 | 0.01 | 0.02 | 0.01 | 0.001 | - | 0.35 | Example |
| 95 | 0.002 | 2.8 | 1.2 | 0.5 | 1.70 | 0.0015 | 0.002 | 0.001 | 0.01 | 0.01 | 0.02 | 0.01 | 0.001 | - | 0.46 | Example |
| 96 | 0.002 | 2.8 | 0.5 | 1.2 | 1.70 | 0.0015 | 0.002 | 0.001 | 0.01 | 0.01 | 0.02 | 0.01 | 0.001 | - | 0.43 | Example |
| 97 | 0.002 | 2.8 | 1.5 | 1.5 | 3.00 | 0.0015 | 0.002 | 0.001 | 0.01 | 0.01 | 0.02 | 0.01 | 0.001 | - | 0.54 | Example |
| 98 | 0.002 | 2.8 | 2.8 | 0.2 | 3.00 | 0.0015 | 0.002 | 0.001 | 0.01 | 0.01 | 0.02 | 0.01 | 0.001 | - | 0.67 | Example |
| 99 | 0.002 | 2.8 | 3.2 | 0.2 | 3.40 | 0.0015 | 0.002 | 0.001 | 0.01 | 0.01 | 0.02 | 0.01 | 0.001 | - | 1.13 | Comparative Example |
| 100 | 0.002 | 2.8 | 0.2 | 2.8 | 3.00 | 0.0015 | 0.002 | 0.001 | 0.01 | 0.01 | 0.02 | 0.01 | 0.001 | - | 0.79 | Example |
| 101 | 0.002 | 2.8 | 0.2 | 3.1 | 3.30 | 0.0015 | 0.002 | 0.001 | 0.01 | 0.01 | 0.02 | 0.01 | 0.001 | - | 1.12 | Comparative Example |
| 102 | 0.002 | 2.8 | 0.5 | 0.5 | 1.00 | 0.0008 | 0.002 | 0.001 | 0.01 | 0.01 | 0.02 | 0.01 | 0.001 | - | 0.35 | Example |
| 103 | 0.002 | 2.8 | 0.5 | 0.5 | 1.00 | 0.0045 | 0.002 | 0.001 | 0.01 | 0.01 | 0.02 | 0.01 | 0.001 | - | 0.42 | Example |
| 104 | 0.002 | 2.8 | 0.5 | 0.5 | 1.00 | 0.0056 | 0.002 | 0.001 | 0.01 | 0.01 | 0.02 | 0.01 | 0.001 | - | 0.39 | Example |
| 105 | 0.002 | 2.8 | 0.5 | 0.5 | 1.00 | 0.0015 | 0.009 | 0.001 | 0.01 | 0.01 | 0.02 | 0.01 | 0.001 | - | 0.42 | Example |
| 106 | 0.002 | 2.8 | 0.5 | 0.5 | 1.00 | 0.0015 | 0.0048 | 0.001 | 0.01 | 0.01 | 0.02 | 0.01 | 0.001 | - | 0.36 | Example |
| 107 | 0.002 | 2.8 | 0.5 | 0.5 | 1.00 | 0.0015 | 0.0053 | 0.001 | 0.01 | 0.01 | 0.02 | 0.01 | 0.001 | - | 0.40 | Example |
| 108 | 0.002 | 2.8 | 0.5 | 0.5 | 1.00 | 0.0015 | 0.002 | 0.0045 | 0.01 | 0.01 | 0.02 | 0.01 | 0.001 | - | 0.38 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

### [Table 5]

**Table 5**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | S | N | O | Cr | Ni | Cu | P | Ti | Other | Wa [µm] | Remarks |
| 109 | 0.002 | 2.8 | 0.5 | 0.5 | 1.00 | 0.0015 | 0.002 | 0.0055 | 0.01 | 0.01 | 0.02 | 0.01 | 0.001 | - | 0.36 | Example |
| 110 | 0.002 | 2.8 | 0.5 | 0.5 | 1.00 | 0.0015 | 0.002 | 0.001 | 0.06 | 0.01 | 0.02 | 0.01 | 0.001 | - | 0.37 | Example |
| 111 | 0.002 | 2.8 | 0.5 | 0.5 | 1.00 | 0.0015 | 0.002 | 0.001 | 0.15 | 0.01 | 0.02 | 0.01 | 0.001 | - | 0.41 | Example |
| 112 | 0.002 | 2.8 | 0.5 | 0.5 | 1.00 | 0.0015 | 0.002 | 0.001 | 2.88 | 0.01 | 0.02 | 0.01 | 0.001 | - | 0.35 | Example |
| 113 | 0.002 | 2.8 | 0.5 | 0.5 | 1.00 | 0.0015 | 0.002 | 0.001 | 3.23 | 0.01 | 0.02 | 0.01 | 0.001 | - | 0.41 | Example |
| 114 | 0.002 | 2.8 | 0.5 | 0.5 | 1.00 | 0.0015 | 0.002 | 0.001 | 0.01 | 0.1 | 0.02 | 0.01 | 0.001 | - | 0.42 | Example |
| 115 | 0.002 | 2.8 | 0.5 | 0.5 | 1.00 | 0.0015 | 0.002 | 0.001 | 0.01 | 0.52 | 0.02 | 0.01 | 0.001 | - | 0.39 | Example |
| 116 | 0.002 | 2.8 | 0.5 | 0.5 | 1.00 | 0.0015 | 0.002 | 0.001 | 0.01 | 1.87 | 0.02 | 0.01 | 0.001 | - | 0.42 | Example |
| 117 | 0.002 | 2.8 | 0.5 | 0.5 | 1.00 | 0.0015 | 0.002 | 0.001 | 0.01 | 2.12 | 0.02 | 0.01 | 0.001 | - | 0.44 | Example |
| 118 | 0.002 | 2.8 | 0.5 | 0.5 | 1.00 | 0.0015 | 0.002 | 0.001 | 0.01 | 0.01 | 0.16 | 0.01 | 0.001 | - | 0.40 | Example |
| 119 | 0.002 | 2.8 | 0.5 | 0.5 | 1.00 | 0.0015 | 0.002 | 0.001 | 0.01 | 0.01 | 1.02 | 0.01 | 0.001 | - | 0.36 | Example |
| 120 | 0.002 | 2.8 | 0.5 | 0.5 | 1.00 | 0.0015 | 0.002 | 0.001 | 0.01 | 0.01 | 1.89 | 0.01 | 0.001 | - | 0.38 | Example |
| 121 | 0.002 | 2.8 | 0.5 | 0.5 | 1.00 | 0.0015 | 0.002 | 0.001 | 0.01 | 0.01 | 2.23 | 0.01 | 0.001 | - | 0.42 | Example |
| 122 | 0.002 | 2.8 | 0.5 | 0.5 | 1.00 | 0.0015 | 0.002 | 0.001 | 0.01 | 0.01 | 0.02 | 0.025 | 0.001 | - | 0.40 | Example |
| 123 | 0.002 | 2.8 | 0.5 | 0.5 | 1.00 | 0.0015 | 0.002 | 0.001 | 0.01 | 0.01 | 0.02 | 0.18 | 0.001 | - | 0.39 | Example |
| 124 | 0.002 | 2.8 | 0.5 | 0.5 | 1.00 | 0.0015 | 0.002 | 0.001 | 0.01 | 0.01 | 0.02 | 0.21 | 0.001 | - | 0.39 | Example |
| 125 | 0.002 | 2.8 | 0.5 | 0.5 | 1.00 | 0.0015 | 0.002 | 0.001 | 0.01 | 0.01 | 0.02 | 0.01 | 0.0025 | - | 0.41 | Example |
| 126 | 0.002 | 2.8 | 0.5 | 0.5 | 1.00 | 0.0015 | 0.002 | 0.001 | 0.01 | 0.01 | 0.02 | 0.01 | 0.0038 | - | 0.45 | Example |
| 127 | 0.002 | 2.8 | 0.5 | 0.5 | 1.00 | 0.0015 | 0.002 | 0.001 | 0.01 | 0.01 | 0.02 | 0.01 | 0.001 | Sn: 0.05 | 0.44 | Example |
| 128 | 0.002 | 2.8 | 0.5 | 0.5 | 1.00 | 0.0015 | 0.002 | 0.001 | 0.01 | 0.01 | 0.02 | 0.01 | 0.001 | Sb: 0.01 | 0.36 | Example |
| 129 | 0.002 | 2.8 | 0.5 | 0.5 | 1.00 | 0.0015 | 0.002 | 0.001 | 0.01 | 0.01 | 0.02 | 0.01 | 0.001 | Mo: 0.01 | 0.39 | Example |
| 130 | 0.002 | 2.8 | 0.5 | 0.5 | 1.00 | 0.0015 | 0.002 | 0.001 | 0.01 | 0.01 | 0.02 | 0.01 | 0.001 | Mo: 0.02 | 0.37 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

### [Table 6]

**Table 6**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | S | N | O | Cr | Ni | Cu | P | Ti | Other | Wa [µm] | Remarks |
| 131 | 0.002 | 2.8 | 0.5 | 0.5 | 1.00 | 0.0015 | 0.002 | 0.001 | 0.01 | 0.01 | 0.02 | 0.01 | 0.001 | Ca: 0.002 | 0.43 | Example |
| 132 | 0.002 | 2.8 | 0.5 | 0.5 | 1.00 | 0.0015 | 0.002 | 0.001 | 0.01 | 0.01 | 0.02 | 0.01 | 0.001 | Ca: 0.005 | 0.40 | Example |
| 133 | 0.002 | 2.8 | 0.5 | 0.5 | 1.00 | 0.0015 | 0.002 | 0.001 | 0.01 | 0.01 | 0.02 | 0.01 | 0.001 | REM: 0.005 | 0.43 | Example |
| 134 | 0.002 | 2.8 | 0.5 | 0.5 | 1.00 | 0.0015 | 0.002 | 0.001 | 0.01 | 0.01 | 0.02 | 0.01 | 0.001 | Mg: 0.002 | 0.40 | Example |
| 135 | 0.002 | 2.8 | 0.5 | 0.5 | 1.00 | 0.0015 | 0.002 | 0.001 | 0.01 | 0.01 | 0.02 | 0.01 | 0.001 | Zn: 0.002 | 0.38 | Example |
| 136 | 0.002 | 2.6 | 0.5 | 0.5 | 1.00 | 0.0015 | 0.002 | 0.001 | 0.01 | 0.01 | 0.02 | 0.01 | 0.001 | - | 0.42 | Example |
| 137 | 0.002 | 4.2 | 0.5 | 0.5 | 1.00 | 0.0015 | 0.002 | 0.001 | 0.01 | 0.01 | 0.02 | 0.01 | 0.001 | - | 0.43 | Example |
| 138 | 0.002 | 4.7 | 0.5 | 0.5 | 1.00 | 0.0015 | 0.002 | 0.001 | 0.01 | 0.01 | 0.02 | 0.01 | 0.001 | - | 0.48 | Example |
| 139 | 0.002 | 5.3 | 0.5 | 0.5 | 1.00 | 0.0015 | 0.002 | 0.001 | 0.01 | 0.01 | 0.02 | 0.01 | 0.001 | - | 0.51 | Comparative Example |
| 140 | 0.002 | 1.5 | 0.5 | 0.5 | 1.00 | 0.0015 | 0.002 | 0.001 | 0.01 | 0.01 | 0.02 | 0.01 | 0.001 | - | 0.52 | Comparative Example |
| 141 | - | 2.6 | 0.5 | 0.5 | 1.00 | 0.0001 | 0.0001 | 0.0005 | - | - | - | - | 0.0001 | - | 0.43 | Example |
| 142 | - | 4.2 | 0.5 | 0.5 | 1.00 | 0.0001 | 0.0001 | 0.0005 | - | - | - | - | 0.0001 | - | 0.45 | Example |
| 143 | - | 4.7 | 0.5 | 0.5 | 1.00 | 0.0001 | 0.0001 | 0.0005 | - | - | - | - | 0.0001 | - | 0.47 | Example |
| 144 | 0.002 | 2.6 | 0.5 | 0.5 | 1.00 | 0.0001 | 0.0001 | 0.0005 | - | - | - | - | 0.0001 | - | 0.39 | Example |
| 145 | - | 2.6 | 0.5 | 0.5 | 1.00 | 0.0015 | 0.0001 | 0.0005 | - | - | - | - | 0.0001 | - | 0.42 | Example |
| 146 | - | 2.6 | 0.5 | 0.5 | 1.00 | 0.0001 | 0.002 | 0.0005 | - | - | - | - | 0.0001 | - | 0.43 | Example |
| 147 | - | 2.6 | 0.5 | 0.5 | 1.00 | 0.0001 | 0.0001 | 0.001 | - | - | - | - | 0.0001 | - | 0.41 | Example |
| 148 | - | 2.6 | 0.5 | 0.5 | 1.00 | 0.0001 | 0.0001 | 0.0005 | 0.01 | - | - | - | 0.0001 | - | 0.43 | Example |
| 149 | - | 2.6 | 0.5 | 0.5 | 1.00 | 0.0001 | 0.0001 | 0.0005 | - | 0.01 | - | - | 0.0001 | - | 0.42 | Example |
| 150 | - | 2.6 | 0.5 | 0.5 | 1.00 | 0.0001 | 0.0001 | 0.0005 | - | - | 0.02 | - | 0.0001 | - | 0.41 | Example |
| 151 | - | 2.6 | 0.5 | 0.5 | 1.00 | 0.0001 | 0.0001 | 0.0005 | - | - | - | 0.01 | 0.0001 | - | 0.40 | Example |
| 152 | - | 2.6 | 0.5 | 0.5 | 1.00 | 0.0001 | 0.0001 | 0.0005 | - | - | - | - | 0.001 | - | 0.42 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

### (Examples 5)

Steel slabs each having a thickness of 150 mm and the chemical compositions listed in Tables 7 to 9 were produced by continuous casting. The steel slabs were each transferred to a tunnel-type gas furnace without cutting and with the surface temperature of the slab maintained at 800 °C or more, and hold treatment was performed in the gas furnace. The hold temperature of the hold treatment was 1150 °C and the hold time was 500 s.

The steel slabs were then hot rolled, consisting of four passes of rough rolling, reheating treatment, and five passes of finish rolling, to obtain hot-rolled steel sheets. The total rolling reduction of the rough rolling was 92 %, and the total rolling reduction of the finish rolling was 91.7 %. Further, in the reheating treatment, the slab immediately after rough rolling was reheated to 1100 °C using an induction heating method.

After finish rolling, the hot-rolled steel sheets were continuously wound into coils to obtain hot-rolled coils, and the hot-rolled coils were subjected to hot-rolled sheet annealing at 1050 °C for 20 s to obtain hot-rolled and annealed sheets. The hot-rolled and annealed sheets were then cold rolled at a rolling reduction of 80 % to obtain cold-rolled steel sheets having a sheet thickness of 0.20 mm. The cold-rolled steel sheets were then subjected to final annealing at 1000 °C for 20 s to obtain non-oriented electrical steel sheets.

In order to evaluate ridging on the surface of the non-oriented electrical steel sheet, arithmetic mean waviness (Wa) of the surface of the non-oriented electrical steel sheet was measured in the same way as for Examples 1, above. The measurement results are listed in Tables 4 to 6.

As can be seen from the results listed in Tables 7 to 9, the arithmetic mean waviness Wa was further reduced and ridging was suppressed in the Examples that satisfied the conditions for suitable rough rolling according to the present disclosure.

### [Table 7]

**Table 7**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | S | N | O | Cr | Ni | Cu | P | Ti | Other | Wa [µm] | Remarks |
| 153 | 0.0045 | 3.0 | 0.5 | 0.5 | 1.00 | 0.0015 | 0.002 | 0.001 | 0.01 | 0.01 | 0.02 | 0.01 | 0.001 | - | 0.28 | Example |
| 154 | 0.002 | 2.1 | 0.5 | 0.5 | 1.00 | 0.0015 | 0.002 | 0.001 | 0.01 | 0.01 | 0.02 | 0.01 | 0.001 | - | 0.42 | Example |
| 155 | 0.002 | 3.4 | 0.5 | 0.5 | 1.00 | 0.0015 | 0.002 | 0.001 | 0.01 | 0.01 | 0.02 | 0.01 | 0.001 | - | 0.33 | Example |
| 156 | 0.002 | 4.0 | 0.5 | 0.5 | 1.00 | 0.0015 | 0.002 | 0.001 | 0.01 | 0.01 | 0.02 | 0.01 | 0.001 | - | 0.31 | Example |
| 157 | 0.002 | 4.5 | 0.5 | 0.5 | 1.00 | 0.0015 | 0.002 | 0.001 | 0.01 | 0.01 | 0.02 | 0.01 | 0.001 | - | 0.34 | Example |
| 158 | 0.002 | 3.0 | 0.2 | 0.15 | 0.35 | 0.0015 | 0.002 | 0.001 | 0.01 | 0.01 | 0.02 | 0.01 | 0.001 | - | 1.12 | Comparative Example |
| 159 | 0.002 | 2.8 | 0.2 | 0.25 | 0.45 | 0.0015 | 0.002 | 0.001 | 0.01 | 0.01 | 0.02 | 0.01 | 0.001 | - | 0.75 | Example |
| 160 | 0.002 | 2.8 | 0.5 | 0.5 | 1.00 | 0.0015 | 0.002 | 0.001 | 0.01 | 0.01 | 0.02 | 0.01 | 0.001 | - | 0.29 | Example |
| 161 | 0.002 | 2.8 | 1.2 | 0.5 | 1.70 | 0.0015 | 0.002 | 0.001 | 0.01 | 0.01 | 0.02 | 0.01 | 0.001 | - | 0.39 | Example |
| 162 | 0.002 | 2.8 | 0.5 | 1.2 | 1.70 | 0.0015 | 0.002 | 0.001 | 0.01 | 0.01 | 0.02 | 0.01 | 0.001 | - | 0.38 | Example |
| 163 | 0.002 | 2.8 | 1.5 | 1.5 | 3.00 | 0.0015 | 0.002 | 0.001 | 0.01 | 0.01 | 0.02 | 0.01 | 0.001 | - | 0.49 | Example |
| 164 | 0.002 | 2.8 | 2.8 | 0.2 | 3.00 | 0.0015 | 0.002 | 0.001 | 0.01 | 0.01 | 0.02 | 0.01 | 0.001 | - | 0.61 | Example |
| 165 | 0.002 | 2.8 | 3.2 | 0.2 | 3.40 | 0.0015 | 0.002 | 0.001 | 0.01 | 0.01 | 0.02 | 0.01 | 0.001 | - | 1.07 | Comparative Example |
| 166 | 0.002 | 2.8 | 0.2 | 2.8 | 3.00 | 0.0015 | 0.002 | 0.001 | 0.01 | 0.01 | 0.02 | 0.01 | 0.001 | - | 0.72 | Example |
| 167 | 0.002 | 2.8 | 0.2 | 3.1 | 3.30 | 0.0015 | 0.002 | 0.001 | 0.01 | 0.01 | 0.02 | 0.01 | 0.001 | - | 1.04 | Comparative Example |
| 168 | 0.002 | 2.8 | 0.5 | 0.5 | 1.00 | 0.0008 | 0.002 | 0.001 | 0.01 | 0.01 | 0.02 | 0.01 | 0.001 | - | 0.29 | Example |
| 169 | 0.002 | 2.8 | 0.5 | 0.5 | 1.00 | 0.0045 | 0.002 | 0.001 | 0.01 | 0.01 | 0.02 | 0.01 | 0.001 | - | 0.33 | Example |
| 170 | 0.002 | 2.8 | 0.5 | 0.5 | 1.00 | 0.0056 | 0.002 | 0.001 | 0.01 | 0.01 | 0.02 | 0.01 | 0.001 | - | 0.32 | Example |
| 171 | 0.002 | 2.8 | 0.5 | 0.5 | 1.00 | 0.0015 | 0.009 | 0.001 | 0.01 | 0.01 | 0.02 | 0.01 | 0.001 | - | 0.35 | Example |
| 172 | 0.002 | 2.8 | 0.5 | 0.5 | 1.00 | 0.0015 | 0.0048 | 0.001 | 0.01 | 0.01 | 0.02 | 0.01 | 0.001 | - | 0.28 | Example |
| 173 | 0.002 | 2.8 | 0.5 | 0.5 | 1.00 | 0.0015 | 0.0053 | 0.001 | 0.01 | 0.01 | 0.02 | 0.01 | 0.001 | - | 0.34 | Example |
| 174 | 0.002 | 2.8 | 0.5 | 0.5 | 1.00 | 0.0015 | 0.002 | 0.0045 | 0.01 | 0.01 | 0.02 | 0.01 | 0.001 | - | 0.30 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

### [Table 8]

**Table 8**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | S | N | O | Cr | Ni | Cu | P | Ti | Other | Wa [µm] | Remarks |
| 175 | 0.002 | 2.8 | 0.5 | 0.5 | 1.00 | 0.0015 | 0.002 | 0.0055 | 0.01 | 0.01 | 0.02 | 0.01 | 0.001 | - | 0.29 | Example |
| 176 | 0.002 | 2.8 | 0.5 | 0.5 | 1.00 | 0.0015 | 0.002 | 0.001 | 0.06 | 0.01 | 0.02 | 0.01 | 0.001 | - | 0.31 | Example |
| 177 | 0.002 | 2.8 | 0.5 | 0.5 | 1.00 | 0.0015 | 0.002 | 0.001 | 0.15 | 0.01 | 0.02 | 0.01 | 0.001 | - | 0.34 | Example |
| 178 | 0.002 | 2.8 | 0.5 | 0.5 | 1.00 | 0.0015 | 0.002 | 0.001 | 2.88 | 0.01 | 0.02 | 0.01 | 0.001 | - | 0.27 | Example |
| 179 | 0.002 | 2.8 | 0.5 | 0.5 | 1.00 | 0.0015 | 0.002 | 0.001 | 3.23 | 0.01 | 0.02 | 0.01 | 0.001 | - | 0.33 | Example |
| 180 | 0.002 | 2.8 | 0.5 | 0.5 | 1.00 | 0.0015 | 0.002 | 0.001 | 0.01 | 0.1 | 0.02 | 0.01 | 0.001 | - | 0.35 | Example |
| 181 | 0.002 | 2.8 | 0.5 | 0.5 | 1.00 | 0.0015 | 0.002 | 0.001 | 0.01 | 0.52 | 0.02 | 0.01 | 0.001 | - | 0.32 | Example |
| 182 | 0.002 | 2.8 | 0.5 | 0.5 | 1.00 | 0.0015 | 0.002 | 0.001 | 0.01 | 1.87 | 0.02 | 0.01 | 0.001 | - | 0.34 | Example |
| 183 | 0.002 | 2.8 | 0.5 | 0.5 | 1.00 | 0.0015 | 0.002 | 0.001 | 0.01 | 2.12 | 0.02 | 0.01 | 0.001 | - | 0.35 | Example |
| 184 | 0.002 | 2.8 | 0.5 | 0.5 | 1.00 | 0.0015 | 0.002 | 0.001 | 0.01 | 0.01 | 0.16 | 0.01 | 0.001 | - | 0.30 | Example |
| 185 | 0.002 | 2.8 | 0.5 | 0.5 | 1.00 | 0.0015 | 0.002 | 0.001 | 0.01 | 0.01 | 1.02 | 0.01 | 0.001 | - | 0.27 | Example |
| 186 | 0.002 | 2.8 | 0.5 | 0.5 | 1.00 | 0.0015 | 0.002 | 0.001 | 0.01 | 0.01 | 1.89 | 0.01 | 0.001 | - | 0.28 | Example |
| 187 | 0.002 | 2.8 | 0.5 | 0.5 | 1.00 | 0.0015 | 0.002 | 0.001 | 0.01 | 0.01 | 2.23 | 0.01 | 0.001 | - | 0.35 | Example |
| 188 | 0.002 | 2.8 | 0.5 | 0.5 | 1.00 | 0.0015 | 0.002 | 0.001 | 0.01 | 0.01 | 0.02 | 0.025 | 0.001 | - | 0.31 | Example |
| 189 | 0.002 | 2.8 | 0.5 | 0.5 | 1.00 | 0.0015 | 0.002 | 0.001 | 0.01 | 0.01 | 0.02 | 0.18 | 0.001 | - | 0.30 | Example |
| 190 | 0.002 | 2.8 | 0.5 | 0.5 | 1.00 | 0.0015 | 0.002 | 0.001 | 0.01 | 0.01 | 0.02 | 0.21 | 0.001 | - | 0.29 | Example |
| 191 | 0.002 | 2.8 | 0.5 | 0.5 | 1.00 | 0.0015 | 0.002 | 0.001 | 0.01 | 0.01 | 0.02 | 0.01 | 0.0025 | - | 0.31 | Example |
| 192 | 0.002 | 2.8 | 0.5 | 0.5 | 1.00 | 0.0015 | 0.002 | 0.001 | 0.01 | 0.01 | 0.02 | 0.01 | 0.0038 | - | 0.34 | Example |
| 193 | 0.002 | 2.8 | 0.5 | 0.5 | 1.00 | 0.0015 | 0.002 | 0.001 | 0.01 | 0.01 | 0.02 | 0.01 | 0.001 | Sn: 0.05 | 0.33 | Example |
| 194 | 0.002 | 2.8 | 0.5 | 0.5 | 1.00 | 0.0015 | 0.002 | 0.001 | 0.01 | 0.01 | 0.02 | 0.01 | 0.001 | Sb: 0.01 | 0.27 | Example |
| 195 | 0.002 | 2.8 | 0.5 | 0.5 | 1.00 | 0.0015 | 0.002 | 0.001 | 0.01 | 0.01 | 0.02 | 0.01 | 0.001 | Mo: 0.01 | 0.29 | Example |
| 196 | 0.002 | 2.8 | 0.5 | 0.5 | 1.00 | 0.0015 | 0.002 | 0.001 | 0.01 | 0.01 | 0.02 | 0.01 | 0.001 | Mo: 0.02 | 0.27 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

### [Table 9]

**Table 9**

| No. | Chemical composition (mass%)* | | | | | | | | | | | | | | Evaluation result | Remarks |
|---|---|---|---|---|---|---|---|---|---|---|---|---|---|---|---|---|
| | C | Si | Al | Mn | [Al] + [Mn] | s | N | O | Cr | Ni | Cu | P | Ti | Other | Wa [µm] | Remarks |
| 197 | 0.002 | 2.8 | 0.5 | 0.5 | 1.00 | 0.0015 | 0.002 | 0.001 | 0.01 | 0.01 | 0.02 | 0.01 | 0.001 | Ca: 0.002 | 0.34 | Example |
| 198 | 0.002 | 2.8 | 0.5 | 0.5 | 1.00 | 0.0015 | 0.002 | 0.001 | 0.01 | 0.01 | 0.02 | 0.01 | 0.001 | Ca: 0.005 | 0.30 | Example |
| 199 | 0.002 | 2.8 | 0.5 | 0.5 | 1.00 | 0.0015 | 0.002 | 0.001 | 0.01 | 0.01 | 0.02 | 0.01 | 0.001 | REM: 0.005 | 0.33 | Example |
| 200 | 0.002 | 2.8 | 0.5 | 0.5 | 1.00 | 0.0015 | 0.002 | 0.001 | 0.01 | 0.01 | 0.02 | 0.01 | 0.001 | Mg: 0.002 | 0.31 | Example |
| 201 | 0.002 | 2.8 | 0.5 | 0.5 | 1.00 | 0.0015 | 0.002 | 0.001 | 0.01 | 0.01 | 0.02 | 0.01 | 0.001 | Zn: 0.002 | 0.28 | Example |
| 202 | 0.002 | 2.6 | 0.5 | 0.5 | 1.00 | 0.0015 | 0.002 | 0.001 | 0.01 | 0.01 | 0.02 | 0.01 | 0.001 | - | 0.33 | Example |
| 203 | 0.002 | 4.2 | 0.5 | 0.5 | 1.00 | 0.0015 | 0.002 | 0.001 | 0.01 | 0.01 | 0.02 | 0.01 | 0.001 | - | 0.33 | Example |
| 204 | 0.002 | 4.7 | 0.5 | 0.5 | 1.00 | 0.0015 | 0.002 | 0.001 | 0.01 | 0.01 | 0.02 | 0.01 | 0.001 | - | 0.40 | Example |
| 205 | 0.002 | 5.3 | 0.5 | 0.5 | 1.00 | 0.0015 | 0.002 | 0.001 | 0.01 | 0.01 | 0.02 | 0.01 | 0.001 | - | 0.45 | Comparative Example |
| 206 | 0.002 | 1.5 | 0.5 | 0.5 | 1.00 | 0.0015 | 0.002 | 0.001 | 0.01 | 0.01 | 0.02 | 0.01 | 0.001 | - | 0.44 | Comparative Example |
| 207 | - | 2.6 | 0.5 | 0.5 | 1.00 | 0.0001 | 0.0001 | 0.0005 | - | - | - | - | - | - | 0.33 | Example |
| 208 | - | 4.2 | 0.5 | 0.5 | 1.00 | 0.0001 | 0.0001 | 0.0005 | - | - | - | - | - | - | 0.34 | Example |
| 209 | - | 4.7 | 0.5 | 0.5 | 1.00 | 0.0001 | 0.0001 | 0.0005 | - | - | - | - | - | - | 0.35 | Example |
| 210 | 0.002 | 2.6 | 0.5 | 0.5 | 1.00 | 0.0001 | 0.0001 | 0.0005 | - | - | - | - | - | - | 0.29 | Example |
| 211 | - | 2.6 | 0.5 | 0.5 | 1.00 | 0.0015 | 0.0001 | 0.0005 | - | - | - | - | - | - | 0.32 | Example |
| 212 | - | 2.6 | 0.5 | 0.5 | 1.00 | 0.0001 | 0.002 | 0.0005 | - | - | - | - | - | - | 0.32 | Example |
| 213 | - | 2.6 | 0.5 | 0.5 | 1.00 | 0.0001 | 0.0001 | 0.001 | - | - | - | - | - | - | 0.31 | Example |
| 214 | - | 2.6 | 0.5 | 0.5 | 1.00 | 0.0001 | 0.0001 | 0.0005 | 0.01 | - | - | - | - | - | 0.33 | Example |
| 215 | - | 2.6 | 0.5 | 0.5 | 1.00 | 0.0001 | 0.0001 | 0.0005 | - | 0.01 | - | - | - | - | 0.33 | Example |
| 216 | - | 2.6 | 0.5 | 0.5 | 1.00 | 0.0001 | 0.0001 | 0.0005 | - | - | 0.02 | - | - | - | 0.31 | Example |
| 217 | - | 2.6 | 0.5 | 0.5 | 1.00 | 0.0001 | 0.0001 | 0.0005 | - | - | - | 0.01 | - | - | 0.30 | Example |
| 218 | - | 2.6 | 0.5 | 0.5 | 1.00 | 0.0001 | 0.0001 | 0.0005 | - | - | - | - | 0.001 | - | 0.32 | Example |

| | | | | | | | | | | | | | | | | |
|---|---|---|---|---|---|---|---|---|---|---|---|---|---|---|---|---|
| * The balance being Fe and inevitable impurity | | | | | | | | | | | | | | | | |

## Claims

1. A method of producing a hot-rolled steel sheet for a non-oriented electrical steel sheet, comprising:
a continuous casting process of producing a steel slab by continuous casting, the steel slab comprising a chemical composition containing, in mass%,
Si: 2.0 % or more to 5.0 % or less,
Al: 3.0 % or less, and
Mn: 3.0 % or less,
wherein a total content of Al and Mn is 0.40 % or more,
the steel slab having a thickness of 50 mm or more and 200 mm or less;
a transfer process of transferring the steel slab to a furnace while maintaining a surface temperature of the steel slab at 800 °C or more;
a hold process of holding the steel slab in the furnace under a set of conditions including a hold temperature of 1100 °C or more to 1300 °C or less and a hold time of 60 s or more; and
a hot rolling process of subjecting the steel slab to rough rolling, reheating treatment, and finish rolling in sequence to obtain a hot-rolled steel sheet, wherein
the hot rolling process is performed under a set of conditions satisfying (1) and (2) below:
(1) total rolling reduction of the rough rolling: 80 % or more, and
(2) total rolling reduction of the finish rolling: 80 % or more.

2. The method of producing a hot-rolled steel sheet for a non-oriented electrical steel sheet according to claim 1, wherein delivery sheet thickness of the finish rolling is 0.4 mm or more and 2.0 mm or less.

3. The method of producing a hot-rolled steel sheet for a non-oriented electrical steel sheet according to claim 1 or 2, wherein the hot rolling process is performed under a set of conditions satisfying at least one of (1') and (2') below:
(1') total rolling reduction of the rough rolling: 88 % or more, and
(2') total rolling reduction of the finish rolling: 88 % or more.

4. The method of producing a hot-rolled steel sheet for a non-oriented electrical steel sheet according to any one of claims 1 to 3, wherein the total rolling reduction of the rough rolling is greater than the total rolling reduction of the finish rolling.

5. The method of producing a hot-rolled steel sheet for a non-oriented electrical steel sheet according to any one of claims 1 to 4, the chemical composition of the steel slab further containing, in mass%, at least one element selected from the group consisting of:
C: 0.005 % or less,
Cr: 3.0 % or less,
Ni: 2.0 % or less,
Cu: 2.0 % or less,
P: 0.2 % or less,
S: 0.0050 % or less,
N: 0.0050 % or less,
O: 0.0050 % or less,
Ti: 0.0040 % or less,
Sn: 0.20 % or less,
Sb: 0.20 % or less,
Mo: 0.10 % or less,
Ca: 0.01 % or less,
REM: 0.05 % or less,
Mg: 0.01 % or less, and
Zn: 0.01 % or less.

6. A method of producing of a non-oriented electrical steel sheet, comprising:
a hot-rolled steel sheet production process producing a hot-rolled steel sheet according to the method of producing a hot-rolled steel sheet for a non-oriented electrical steel sheet according to any one of claims 1 to 5;
a hot-rolled sheet annealing process of annealing the hot-rolled steel sheet;
a cold rolling process of cold rolling the hot-rolled steel sheet to obtain a cold-rolled steel sheet; and
a final annealing process of final annealing the cold-rolled steel sheet.
